# EUROPÄISCHE PATENTSCHRIFT

(11) **EP 0 883 778 B1**
(45) Veröffentlichungstag und Bekanntmachung des Hinweises auf die Patenterteilung: **16.05.2001**
(21) Anmeldenummer: 96929283.8
(22) Anmeldetag: 20.08.1996
(51) Int. Cl.: F23G 5/04, F23G 5/32, F23G 5/46, F23J 7/00, F23J 15/02, F23J 15/06

(54) **VERFAHREN ZUR VERBRENNUNG VON KLÄRSCHLAMM UND ANLAGE ZUR DURCHFÜHRUNG DES VERFAHRENS**
SEWAGE SLUDGE INCINERATION PROCESS AND PLANT
PROCEDE D'INCINERATION DE BOUES D'EPURATION ET INSTALLATION CORRESPONDANTE

(30) Priorität: 26.08.1995 DE 19531379
(43) Veröffentlichungstag der Anmeldung: 16.12.1998
(73) Patentinhaber: L. & C. Steinmüller GmbH, 51643 Gummersbach (DE)
(72) Erfinder: SCHMID, Christoph, D-51702 Bergneustadt (DE); CHUGHTAI, Yaqub, D-51643 Gummersbach (DE)
(74) Vertreter: Carstens, Wilhelm, Dipl.-Phys.
(86) Internationale Anmeldenummer: EP9603655
(87) Internationale Veröffentlichungsnummer: WO9708495

(56) Entgegenhaltungen:
- EP-A- 0 253 480
- EP-A- 0 716 264
- WO-A-85/02453
- DE-A- 1 908 612
- BWK BRENNSTOFF WARME KRAFT, Oktober 1993, DUSSELDORF DE, Seiten E32-E43, XP000415846 W. SCHÄFERS, H. NIEPEL, F. LICHTMANN: "Schadstoffbeladenen Aktivkoks, Klärschlamm and andere Reststoffe durch Verbrennung entsorgen" in der Anmeldung erwähnt
- PATENT ABSTRACTS OF JAPAN vol. 9, no. 98 (M-375), 27.April 1985 & JP,A,59 221512 (KURITA KOGYO KK), 13.Dezember 1984,

## Beschreibung

Die Erfindung betrifft zunächst ein Verfahren zur Verbrennung von Klärschlamm der im Oberbegriff des Anspruches 1 genannten Art.

Ein solches Verfahren ist ausPatent Abstracts of Japan, Vol. 9, No. 98 (M - 375), 27. April 1985 bekannt. Bei dem bekannten Verfahren wird der Klärschlamm zunächst in einem indirekt beheizten Trockner getrocknet. Das Rauchgas der für die Verbrennung eingesetzten Wirbelschicht-Verbrennungseinrichtung wird in einem Zyklon entstaubt und dann einem Abhitzekessel zugeführt. Der im Abhitzekessel erzeugte Dampf wird für die indirekte Heizung des Trockners eingesetzt. Das aus dem Abhitzekessel austretende abgekühlte Rauchgas wird über einen Wärmetauscher geführt, in dem die aus dem Trockner austretenden Brüden erwärmt werden. Es findet sich kein Hinweis auf die Zufuhr von basischen Additiven zur Beeinflussung der Zusammensetzung des in die Umgebung abgeführten Rauchgases.

Weiterhin ist es aus der WO-A-85/02453 bekannt, zur Abkühlung von sauren Schadgasen der Brennkammer einer Müllverbrennungsanlage ein basisches Additiv zuzuführen und dem in einem ersten Trockenabscheider vorgereinigten Rauchgas ein weiteres basisches Additiv zuzuführen, bevor das Rauchgas einer filternden Abscheidung zugeführt wird. Zwischen dem Rauchgasaustritt der Brennkammer und dem ersten Trockenabscheider einerseits und den beiden Trockenabscheidern andererseits ist jeweils keine Wärmesenke vorgesehen. Das Rauchgas wird der Sorptionseinrichtung, in der das weitere basische Additiv zugeführt wird, mit einer Temperatur unter 400°C zugleitet, d.h. mit der Temperatur, mit der das Rauchgas die Brennkammer verlässt.

Aus der DE-Z. BWK/TU/UMWELT/SPEZIAL, Oktober 1993, S. E32-E43, insbes. S. E40 ist ein Verfahren bekannt, bei dem das mittels Wärme aus der Klärschlammverbrennung in einer Zykloidfeuerung getrocknete Klärschlammgranulat der Zykloidfeuerung dosiert zugeführt und in deren Drallströmung verbrannt. Darüber hinaus werden auch die nicht kondensierbaren Brüdenbestandteile zur thermischen Desodorierung in die Brennkammer geleitet. Die aus der Brennkammer austretenden Rauchgase strömen in einen Abhitzekessel, wo sie auf ca. 200 °C abekühlt werden. Der in dem Abhitzekessel erzeugte Dampf wird als Heizdampf dem Trockner zugeführt. Hinter dem Abhitzekessel ist ein Gewebefilter zum Abscheiden der Klärschlammasche angeordnet und die von der Asche befreiten Rauchgase werden dann einer Rauchgaswäsche unterzogen und verlassen gereinigt die Anlage. Bei dem bekannten Verfahren erfolgt in dem Abhitzekessel eine Abkühlung auf 200 °C, so daß die im Gewebefilter abgezogene Filterasche mit Schadstoffen, insbesondere kondensierbaren Schwermetallen und deren Verbindungen, sowie Produkten unvollständiger Verbrennung, belastet ist.

Mit der deutschen Patentanmeldung 195 01 736.6-13 vom 1995-01-20 bzw. der EP 0 716 264 A2 ist ein Verfahren zur Verbrennung von Klärschlamm vorgeschlagen worden, bei dem in Weiterbildung des bekannten Verfahrens der Feuerung ein basisches Additiv zugeführt wird, danach die Rauchgase einer ersten Entstaubung und einer Abkühlung unterzogen werden, danach dem Rauchgas erneut Wärme unter Abkühlung des Rauchgases auf eine tiefere, jedoch oberhalb der Kühlgrenztemperatur für Wasserdampfkondensation des Rauchgases liegende Temperatur entzogen wird, und bei dem danach dem Rauchgas ein weiteres basisches Additiv zgueführt und anschließend das Rauchgas einer filternden Entstaubung zugeführt wird.

Es wurde festgestellt, daß trotz der Abkühlung der Rauchgase auf eine erste Temperatur oberhalb der Kondensationstemperatur bei Durchführung der ersten Entstaubung nach dem Entzug von Wärme für die Trocknung des Klärschlamms noch eine gewisse Schwermetallbelastung der abgeschiedenen Asche und ggf. eine Verschmutzungsgefahr der für die Abkühlung der Rauchgase benutzten Anordnung möglich sind.

Es ist daher die Aufgabe, ein Verfahren der im Oberbegriff des Anspruchs 1 genannten Art anzugeben, bei dem zumindest ein Teil der auf die Verbrennung und die Gasreinigung zurückgehenden Feststoffe im wesentlichen unbelastet aus dem Verfahren herausgeführt werden können.

Weiterhin wird angestrebt, die bei der nicht vorveröffentlichten Weiterbildung des Verfahrens auftretende Schwermetallbelastung und ggf. Verschmutzung weitgehendst zu vermeiden.

Diese Aufgabe wird durch die Merkmale im Kennzeichen des Anspruches 1 gelöst.

Die Erfindung richtet sich auch auf ein Verfahren der im Oberbegriff des Anspruches 2 genannten Art, bei dem dieselbe Aufgabe zu lösen ist.

Hier wird dies durch die Merkmale im Kennzeichen des Anspruches 2 gelöst.

Unter einer Zykloidfeuerung wird in der Beschreibung und in den Ansprüchen eine Feuerung verstanden, bei der Brennstoff in einer Drallströmung verbrannt wird. Vorzugsweise wird in die Verbrennung Wirbelluft zugeführt, wie dies in Bild 3 auf S. E36 der DE-Z. dargestellt ist.

In der ersten Entstaubung wird eine Mischung aus Flugstaub und dem zumindest teilweise abreagierten basischen Additiv abgeschieden. Dieser Staub weist nur noch sehr wenig Schwermetalle und deren Verbindungen auf. Außerdem liegen im wesentlichen keine Produkte unvollständiger Verbrennung vor. Folglich kann dieses Produkt z. B. als Bodenverbesserer oder als Zuschlagsstoff in der Bau- oder Baustoffindustrie eingesetzt werden. Auf diese Weise wird die Klärschlammasche größtenteils verwertet. Nur der bei der zweiten Entstaubung abgezogene Staub, der praktisch alle kondensierten Schwermetalle enthält, jedoch kaum Organika, muß entsorgt werden.

Sollte noch nach der Zufuhr von weiterem Additiv nach der zweiten Entstaubung ein Restgehalt an Staub, sauren Schadgaskomponenten, nicht kondensiertem Quecksilber und Organika vorhanden sein, ist es zweckmäßig, noch ein Feinreinigungsfilter nachzuschalten.

Die Unteransprüche 3 bis 5 betreffen weitere Ausgestaltungen der erfindungsgemäßen Verfahren.

Die Erfindung richtet sich auch auf Verbrennungsanlagen gemäß Ansprüchen 6 bis 8.

Die Erfindung soll nun anhand der beigefügten Figuren näher erläutert werden.
Es zeigen:
- FIG. 1: eine erste Verfahrensführung mit direkter Klärschlammtrocknung und
- FIG. 2: eine zweite Verfahrensführung mit direkter Klärschlammtrocknung.

Mechanisch vorentwässerter Schlamm mit einem Trockensubstanzgehalt oberhalb 20% TS, bevorzugt jedoch oberhalb 25% TS (Massenprozent), wird einem Bunker 1 aufgegeben. Von dort erfolgt die dosierte Förderung des Schlamms mit Hilfe einer Schlammpumpe 2, die z. B. als Kolbenpumpe, Exzenterschneckenpumpe ausgeführt sein kann, über eine Schnecke 29 in einen direkt beheizten Trockner 30. Falls ein Dünnschlamm mit 3 - 5% TS verwertet werden soll, so ist dem Trockner eine mechanische Vorentwässerung, z. B. ein Dekanter vorzuschalten.

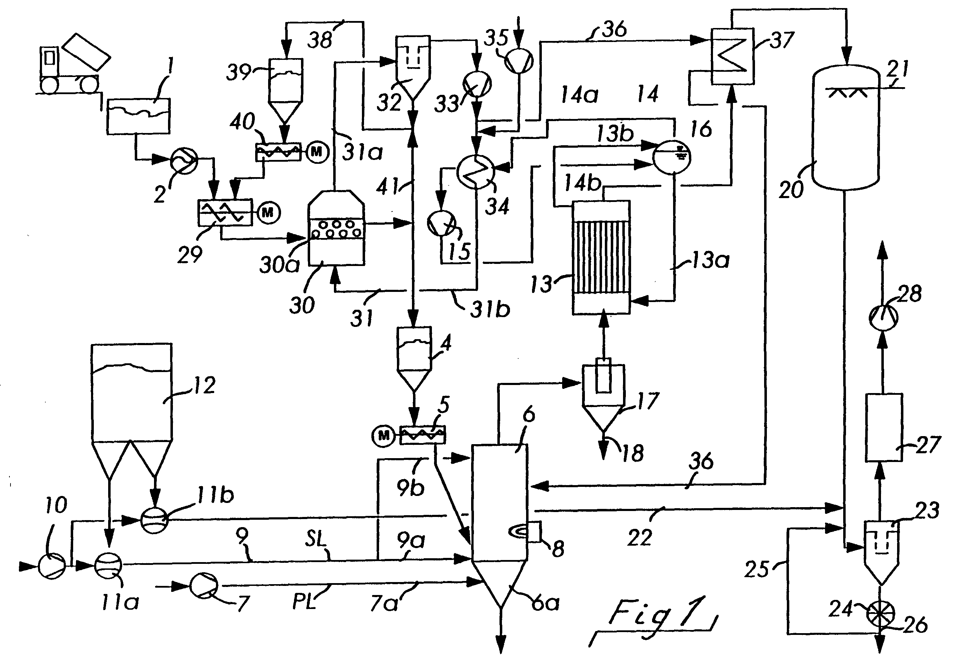

Der Trockenschlamm wird nach Austritt aus dem Trockner 30 in einen Pufferbehälter 4 abgeworfen. Von dort erfolgt die Aufgabe mit Hilfe eines Dosierorgans 5, das in der FIG. 1 als motorisch angetriebene Austragsschnecke dargestellt ist, in eine Zykloidbrennkammer 6. Der Zykloidbrennkammer wird über ein Gebläse 7 und eine Leitung 7a Primärluft PL so zugeführt, daß die Primärluft verdrallt über den unteren Brennkammerkonus 6a in die Brennkammer eintritt. Der Brennkammer ist ein Anfahr- und Stützbrenner 8 sowie eine Sekundärluftversorgung 9 einschließlich eines Gebläses 10 zugeordnet. Die Verbrennung erfolgt selbstgängig, d. h. der Brenner 8 ist üblicherweise außer Betrieb.

Der Sekundärluft SL wird über einen Injektor 11a ein basisches Additiv, vorzugsweise Kalkhydrat, aus einem Silo 12 zugegeben. Auf diese Weise wird eine erste trockene Rauchgasreinigungsstufe realisiert, da in der Brennkammer 6 eine sehr ausgeglichene Temperaturverteilung vorliegt, vorzugsweise im Bereich von 900-1050°C. Bei dieser Temperaturverteilung ist eine sehr gute Einbindung von sauren Schadgaskomponenten, insbesondere SOₓ, unter Bildung der entsprechenden Calziumverbindungen erreichbar.

Danach durchströmen die Rauchgase einen Staubabscheider, der vorzugsweise als Hochtemperaturzyklon 17 ausgebildet ist. In dem Hochtemperaturzyklon 17 werden 90% bei beispielsweise 900 - 1000°C, bevorzugt aber noch mehr der mitgeführten Mischung aus Flugstaub und abreagiertem Additiv als erstes Produkt 18 abgeschieden. Dieses Produkt enthält sehr wenig kondensierte Schwermetalle und deren Verbindungen, sowie keine Produkte unvollständiger Verbrennung.

Die Rauchgase durchströmen dann einen Abhitzekessel 13, der in einen Wasserdampf-Kreislauf 14 mit Vorlauf 14a, Wärmetauscher 34 und Rücklauf 14b einschließlich einer Kreislaufpumpe 15 und einer Trommel 16 in der aus der FIG. 1 ersichtlichen Weise mittels einer Zufuhrleitung 13a von Trommel 16 und einer Abfuhrleitung 13b zur Trommel 16 eingeschaltet ist. Bevorzugt wird die Ausbildung des Abhitzekessel als Sattdampf-Rauchrohrkessel, wie es in der FIG. 1 dargestellt ist. In dem Kessel erfolgt eine Abkühlung auf beispielsweise 450°C.

In dem Fließbett 30a des Fließbetttrockners 30 wird die Schlammschicht direkt von einem in einem Kreislauf 31 geführten Wärmeträgermedium durchströmt und damit getrocknet, das im wesentlichen aus den bei der Trocknung entstehenden Brüden besteht. Die Brüden werden über eine Brüdenabzugsleitung 31a einem Gewebefilter 32 zugeführt, in dem sie entstaubt werden. Von dort werden sie über eine einen Brüdenkompressor 33 und den Wärmetauscher 34 enthaltende Kreislaufleitung 31 b zum Fließbetttrockner 30 zurückgeführt. Mit Hilfe des Dampfes des Wasser-Dampf-Kreislaufes 14 werden die im Brüdenkompressor 33 komprimierten Brüden auf die erforderliche Trocknungstemperatur gebracht.

Wie aus der FIG. 1 ersichtlich ist, kann eventuell über ein Gebläse 35 Frischluft in den Brüdenkreislauf 31 stromauf des Wärmetauschers 34 eingespeist werden. Es ist auch möglich, Frischluft direkt dem Trockner zuzuführen.

Ein Teil der Brüden (verdampfte Wassermenge und eventuell zugeführte Luft) wird über eine Leitung 36 der Zykloidbrennkammer 6 unter Zwischenschaltung eines Wärmetauschers 37 zugeführt. In dem Wärmetauscher 37 wird die nach dem Abhitzekessel 13 aus den Rauchgasen zu entnehmende Wärme auf die der Zykloidbrennkammer 6 zuzuführenden Brüden übertragen.

Das beispielsweise in dem Wärmetauscher 37 auf 200°C abgekühlte Rauchgas wird danach einer als Verdampfungskühler wirkenden Quenche 20 zugeleitet, mit deren Hilfe unter Zusatz von Frischwasser 21 das Rauchgas auf die Betriebstemperatur einer nachgeschalteten zweiten trockenen Rauchgasreinigungsstufe abgekühlt wird. Die Betriebstemperatur dieser Rauchgasreinigungsstufe liegt oberhalb der Kühlgrenztemperatur (adiabatische Sättungstemperatur) der Rauchgase, bevorzugt im Bereich von 100-150°C. Zur Bildung der zweiten trockenen Rauchgasreinigungsstufe wird über einen ebenfalls vom Gebläse 10 beaufschlagten Injektor 11b über Leitung 22 basisches Additiv, vorzugsweise Calziumhydrat, stromauf eines Gewebefilters 23 eingeblasen. Die zweite Rauchgasreinigungsstufe stellt bezüglich der sauren Schadgaskomponenten und des Stoffes eine Feinreinigung dar. In dem Gewebefilter 23 bildet sich aus den abgeschiedenen Feststoffen eine Filterhilfsschicht.

Die im Gewebefilter abgeschiedenen Feststoffe können über eine Zellradschleuse 24 und eine Rückführleitung 25 zurück in den Rauchgasstrom vor dem Gewebefilter 23 rezirkuliert werden. Ein Teilstrom 26 wird ausgeschleust. Dieser enthält praktisch alle kondensierten Schwermetalle, jedoch kaum Organika. An die zweite trockene Rauchgasreinigungsstufe schließt sich ein Aktivkoksfilter 27 an, der bezüglich Staub und sauren Schadgaskomponenten eine Polizeifilterfunktion erfüllt. Hinsichtlich Quecksilber und Organika wird die Feinreinigungsfunktion erfüllt. Anstelle eines Aktivkoksfilters kann auch ein Zeolithfilter eingesetzt werden. Wegen der geringen Belastung kann das Filtermaterial des Filters 27 in mehr oder weniger langen Intervallen ausgetauscht werden. Es wird regeneriert oder im Falle des Aktivkoks kann auch an eine Mitverbrennung in der Feuerung 6 gedacht werden.

An den Filter 27 schließt sich ein Saugzuggebläse 28 an, das die Rauchgase an einem nicht dargestellten Kamin zuführt.

Bei der gezeigten Ausführungsform wird das Additiv für die zweite Reinigungsstufe zwischen Quenche 20 und Gewebefilter 23 aufgegeben. Es kann jedoch auch sinnvoll sein, das zweite Additiv zwischen dem Wärmetauscher 37 und der Quenche 20 zuzugeben.

Bei der gezeigten Ausführungsform wird die Sekundärluft über Leitungen 9a und 9b gestuft zugeführt. Selbstverständlich ist es auch möglich, neben den Produkten 18 und 26 noch Grobasche aus der Zykloidbrennkammer 30 selbst abzuziehen, falls der Verbrennungsprozeß so geführt wird, daß sich Grobasche bildet.

Die am Gewebefilter abgeschiedenen Feststoffe können über eine Leitung 38 unter Zwischenschaltung eines Pufferbehälters 39 und einer Förderschnecke 40 ebenfalls der Schnecke 29 aufgegeben werden, um die Konsistenz des im Trockner zuzuführenden Klärschlammes (Leimphase) einzustellen.

Zu diesem Zwecke wäre es auch denkbar, einen Teil des den Trockner 30 verlassenden Trockengutes über Leitung 41 zurückzuführen. (Eine solche Rückführung von Trockengut vor den Eingang des Trockners wäre auch bei der Verfahrensführung gemäß Fig. 1 (vor Trockner 30) denkbar).

Auch ist es möglich, daß als Wärmeträgermedium für eine direkte Klärschlammtrocknung ein Kreislaufgas eingesetzt wird, vorzugsweise Luft und/oder bei der Trocknung entstehende Brüden, das durch Wärmetausch mit dem Rauchgasen erwärmt wird.

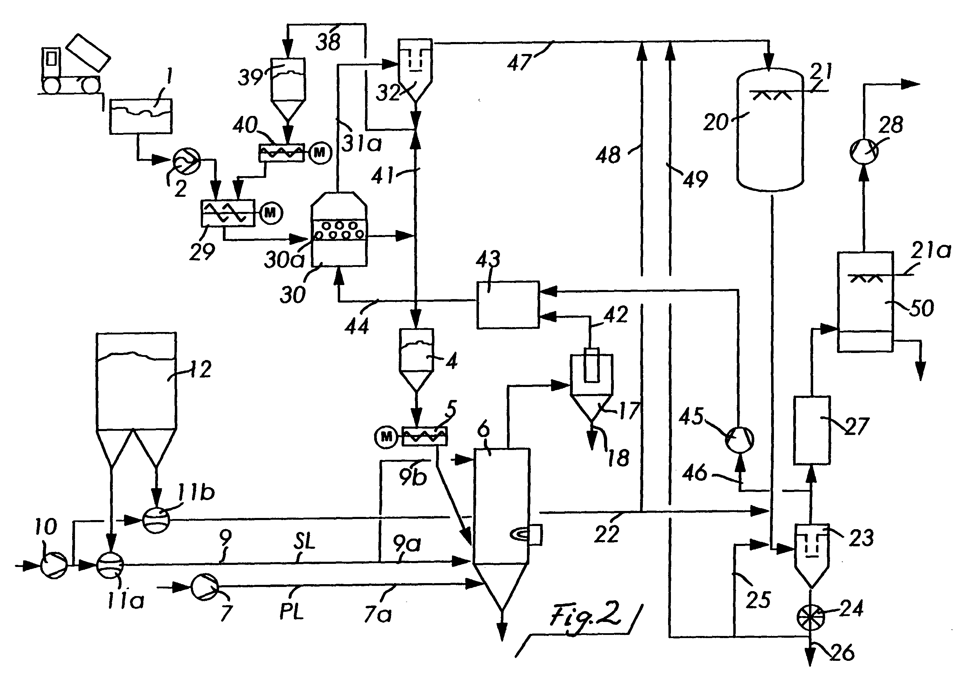

Es kann jedoch auch das Rauchgas als Wärmemedium für einen direkten Trocknungsprozeß ohne Wasser-Dampf-Kreislauf verwendet werden, ohne daß es vorher eines Wärmetausches mit einem Wärmeträgermedium bedarf. Dies wird anhand der Fig. 2 beschrieben. Bei der Fig. 2 sind die Bezugszeichen soweit als möglich übernommen worden. Bei der Fig. 2 ist der Oberstrom des Zyklonabscheiders 17 über eine Leitung 42 mit einer Kühlquenche 43 verbunden, die ihrerseits über eine Leitung 44 mit dem Trockner 30 verbunden ist. Der Kühlquenche 43 wird über ein Gebläse 45 und eine Leitung 46 Kaltgas zugeführt, das bei dem Beispiel gemäß Fig. 2 nach dem Gewebefilter 23 entnommen wird. Die direkt hinter dem Zyklon 17 angeordnete Gasquenche 43 dient dazu, um die Eintrittstemperatur des Rauchgases in den Trockner 30 herunterzukühlen, vorzugsweise auf 150-400°C. Es ist auch denkbar, der Gasquenche 43 anstelle des kalten Rauchgases auch Luft zuzuführen. Die Mischung aus dem Rauchgas, dem Kühlgas und den beim Trocknungsvorgang entstehenden Brüden werden wie bei der Verfahrensführung gemäß Fig. 2 im Filter 32 entstaubt und dann direkt über eine Leitung 47 der Quenche 20 zugeleitet. Wie in der Fig. 2 dargestellt, kann auch ein Teil des über Leitung 22 zugeführten Additivs und/oder ein Teil des im Gewebefilter 23 abgeschiedenen Feststoffgemisches über Leitung 48 bzw. 49 vor der Quenche aufgegeben werden, falls dies gewünscht wird.

Bei der Verfahrensführung gemäß Fig. 2 ist dem Saugzug 28 direkt ein mit Wasser 21 a beaufschlagter Kondensator 50 vorgeschaltet. Dieser Kondensator ist möglicherweise notwendig, um diejenigen bei der Trocknung entweichenden gasförmigen Stoffe sicher zu entfernen, die durch die bisher beschriebene mehrstufige Reinigung nicht abgeschieden werden. Eine Anwendung bei Fig. 1 ist auch denkbar.

## Patentansprüche

1. Verfahren zur Verbrennung von Klärschlamm, bei dem der Klärschlamm mittels eines durch ein Wärmeträgermedium (31) beheizten Trockners (30) getrocknet und danach in einer Feuerung (6) verbrannt wird, bei dem das Rauchgas der Feuerung einer ersten Entstaubung (17), und danach einem Abhitzekessel (13) zur Erzeugung von Dampf unter einer ersten Abkühlung des Rauchgases zugeführt wird und danach das Rauchgas einer zweiten Abkühlung (20) auf eine tiefere Temperatur unterzogen wird und anschließend das Rauchgas einer filternden Entstaubung (23) zugeführt wird und bei dem Wärme des in dem Abhitzekessel erzeugten Dampfes dem Trockner als Heizwärme zugeführt wird und Brüden aus dem Trockner abgeführt werden,
**dadurch gekennzeichnet**, daß von dem im Abhitzekessel (13) erzeugten Dampf durch Wärmetausch (34) Heizwärme auf ein in einem Kreislauf geführtes Wärmeträgermedium für eine direkte Trocknung des Klärschlammes übertragen wird,
daß die zweite Abkühlung zumindest durch eine Kühlquenche (20) auf eine oberhalb der adiabatischen Kühlgrenztemperatur für Wasserdampfkondensation des Rauchgases liegende Temperatur erfolgt und daß der Feuerung (6) ein basisches Additiv (9) und dem Rauchgas vor der filternden Entstaubung (23) ein weiteres basisches Additiv (22) zugeführt wird.

2. Verfahren zur Verbrennung von Klärschlamm, bei dem der Klärschlamm mittels eines durch ein Wärmeträgermedium (31) beheizten Trockners (3) getrocknet und danach in einer Feuerung (6) verbrannt wird, bei dem das Rauchgas der Feuerung einer ersten Entstaubung (17), danach einer ersten Abkühlung (40, 46) und nach der ersten Abkühlung einer zweiten Abkühlung (20) auf eine tiefere Temperatur unterzogen wird und anschließend das Rauchgas einer filternden Entstaubung (23) zugeführt wird und Brüden (31) aus dem Trockner abgeführt werden,
**dadurch gekennzeichnet**, daß das Rauchgas (42) nach der ersten Entstaubung (17) dem Trockner (30) als Wärmeträgermedium für eine direkte Trocknung des Klärschlamms zugeführt wird,
daß die zweite Abkühlung zumindest durch eine Kühlquenche (20) auf eine oberhalb der adiabatischen Kühlgrenztemperatur für Wasserdampfkondensation des Rauchgases liegende Temperatur erfolgt und daß der Feuerung (6) ein basisches Additiv (9) und dem Rauchgas vor der filternden Entstaubung (23) ein weiteres basisches Additiv (22) zugeführt wird.

3. Verfahren nach Anspruch 2,
**dadurch gekennzeichnet**, daß als Wärmeträgermedium für die direkte Klärschlammtrocknung ein nach der ersten Entstaubung durch Zumischung von Kaltgas gekühltes Rauchgas (43) eingesetzt wird.

4. Verfahren nach einem der Ansprüche 1 - 3,
**dadurch gekennzeichnet**, daß die Trocknung verlassende Mischung aus Rauchgas, Brüden und ggfl. Kühlgas vor der Zufuhr des weiteren basischen Additivs entstaubt (32) wird.

5. Verfahren nach einem der Ansprüche 1 - 4,
**dadurch gekennzeichnet**, daß das weitere basische Additiv vor oder nach der Kühlquenche (20) zugeführt wird.

6. Anlage zur Verbrennung von Klärschlamm mit einem Trockner (30) zur Trocknung des Klärschlamms mit einem Wärmeträgermedium (31), einer dem Trockner nachgeschalteten Verbrennungseinrichtung (6), einer der Verbrennungseinrichtung direkt nachgeschalteten ersten Staubabscheidung (17), einem der ersten Staubabscheidung nachgeschalteten Abhitzekessel (13) als Wärmesenke zur Erzeugung von Dampf, einer dem Abhitzekessel nachgeschalteten weiteren Wärmesenke, und einer der zweiten Wärmesenke nachgeschalteten zweiten Staubabscheidung (23),
**dadurch gekennzeichnet**, daß für eine direkte Trocknung des Klärschlammes dem Trockner (30) ein Wärmeträgermediumkreislauf (31) zugeordnet ist,
daß in den Wärmeträgermediumkreislauf (31) ein Wärmetauscher (34) angeordnet ist, mit dessen Hilfe Wärme aus dem von dem Abhitzekessel (13) erzeugten Dampf auf den Wärmeträgermediumkreislauf übertragbar ist,
daß die weitere Wärmesenke zumindest eine Kühlquenche (20) umfasst, und daß eine Einrichtung (11a; 9a, 9b) für die Zufuhr eines basischen Additivs zur Feuerung (6) vorgesehen ist und der filternden Entstaubung (23) eine weitere Einrichtung (22) für die Zufuhr von basischem Additiv vorgeschaltet ist.

7. Anlage zur Verbrennung von Klärschlamm mit einem Trockner (30) zur Trocknung des Klärschlamms mit einem Wärmeträgermedium (31), einer dem Trockner nachgeschalteten Verbrennungseinrichtung (6), einer der Verbrennungseinrichtung direkt nachgeschalteten ersten Staubabscheidung (17), einem der ersten Staubabscheidung nachgeschalteten ersten Wärmesenke (43, 46) und einer der ersten Wärmesenke nachgeschalteten weiteren Wärmesenke (20) und einer der weiteren Wärmesenke nachgeschalteten zweiten Staubabscheidung (23),
**dadurch gekennzeichnet**, daß für die direkte Trocknung des Klärschlammes die erste Staubabscheidung (17) rauchgasseitig mit dem Trockner (30) verbunden ist und die mit dem Ausgang des Trockners verbundene weitere Wärmesenke zumindest eine Kühlquenche (20) umfasst und daß eine Einrichtung (11 a; 9a, 9b) für die Zufuhr eines basischen Additivs zur Feuerung (6) vorgesehen ist und der filternden Entstaubung (23) eine weitere Einrichtung (22) für die Zufuhr von basischem Additiv vorgeschaltet ist.

8. Anlage nach Anspruch 6 oder 7,
**dadurch gekennzeichnet**, daß die weitere Einrichtung (22) für die Zufuhr von basischem Additiv der Kühlquenche (20) vor- oder nachgeschaltet ist.

## Claims

1. Process for incineration of sewage sludge, with which the sewage sludge is dried by a drier (30) heated by means of a heat transfer medium and then is incinerated in a furnace (6), with which the flue gas of the furnace is supplied to a first dedusting (7) and thereafter to a waste heat boiler (13) for the generation of steam with a first cooling of the flue gas and thereafter the flue gas is subjected to a second cooling (20) to a lower temperature and the flue gas is then supplied to a filtering dedusting (23) and with which heat of the generated steam is supplied to the drier as heating heat and vapours generated during drying are withdrawn from the drier,
characterized in that heating heat is transferred from the steam generated in the waste heat boiler (13) by heat exchange (34) to a circulated heat transfer medium for the direct drying of the sewage sludge,
in that the second cooling is performed at least by cooling quench means (20) to a temperature higher then the adiabatic cooling limit temperature of the flue gas for the water vapour condensation
and in that a basic additive (9) is fed to the furnace (6) and a further basic additive (23) is fed to the flue gas upstream the filtering dedusting (23).

2. Process for incineration of sewage sludge, with which the sewage sludge is dried by a drier (30) heated by means of a heat transfer medium and then is incinerated in a furnace (6), with which the flue gas of the furnace is subjected to a first dedusting (7) and thereafter to a first cooling (43,46) and after the first cooling to a second cooling (20) to a lower temperature and the flue gas is then supplied to a filtering dedusting (23)and vapours (31) generated during drying are withdrawn from the drier,
characterized in that after the first dedusting (17) the flue gas (42) is supplied to the drier (30) as heat transfer medium for a direct drying of the sewage sludge, in that the second cooling is performed at least by cooling quench means (20) to a temperature higher then the adiabatic cooling limit temperature of the flue gas for the water vapour condensation
and in that a basic additive (9) is fed to the furnace (6) and a further basic additive (23) is fed to the flue gas upstream the filtering dedusting (23).

3. Process as claimed in claim 2,
characterized in that as heat transfer medium for the direct drying of sewage sludge a flue gas (43) is used, which has been cooled after the first dedusting by admixture of cold gas.

4. Process as claimed in one of the claims 1 - 3,
characterized in that the mixture of flue gas, vapours and eventually cooling gas leaving the drier is dedusted before supplying the further basic additive (32).

5. Process as claimed in one of the claims 1 - 4,
characterized in that the further basic additive is supplied upstream or downstream the cooling quench means (20).

6. Plant for the incineration of sewage sludge including a drier (30) for drying the sewage sludge by means of a heat transfer medium (31), a furnace (6) connected to the drier (30), first dedusting means (17) directly connected to the furnace, a waste heat boiler (13) connected to the first dedusting as a heat sink for the generation of steam, a further heat sink connected to the waste heat boiler and second dedusting means (23) connected to the second heat sink,
characterized in that for a direct drying of the sewage sludge a heat transfer medium circuit (31) is associated to the drier (30),
in that in the heat transfer medium circuit (31) a heat exchanger is arranged, with which heat is transferable from the steam generated in the waste heat boiler (13) to the heat transfer medium circuit,
in that the further heat sink at least includes cooling quench means (20) and in that means (11 a;9a,9b) for the supply of a basic additive to the furnace (6) are provided and further means (22) for the supply of basic additive are arranged upstream the filtering dedusting (23).

7. Plant for the incineration of sewage sludge including a drier (30) for drying the sewage sludge by means of a heat transfer medium (31), a furnace (6) connected to the drier (30), first dedusting means (17) directly connected to the furnace, a first heat sink (43,46) connected to the first dedusting and a further heat sink (20) connected to the first heat sink and second dedusting means (23) connected to the second heat sink,
characterized in that for a direct drying of the sewage sludge theflue gas outlet of the first dedusting (17) is connected to the drier and the further heat sink connect to the outlet of the drier at least includes cooling quench means (20)and in that means (11a;9a,9b) for the supply of a basic additive to the furnace are provided and further means (22) for the supply of basic additive are arranged upstream the filtering dedusting (23).

8. Plant as claimed in claim 6 or 7,
characterized in that the further means (22) for the supply of basic additive arw arranged upstream or downstream of the cooling quench means (20).

## Revendications

1. Procédé d'incinération de boues de curage, selon lequel la boue de curage est séchée au moyen d'un séchoir (30) chauffé par un milieu caloporteur (31) et ensuite est incinérée dans une installation de combustion (6), selon lequel le gaz de fumée de l'installation de combustion est envoyé à une première unité de dépoussièrage (17), puis à une chaudière à récupération de chaleur (13) pour la production de vapeur moyennant un premier refroidissement du gaz de fumée, puis le gaz de fumée est soumis à un second refroidissement (20) à une température plus basse, et ensuite le gaz de fumée est envoyé à une unité de dépoussiérage avec filtration (23) et selon lequel de la chaleur de la vapeur produite dans la chaudière à récupération de chaleur est envoyée au séchoir en tant que chaleur de chauffage et des vapeurs sont évacuées du séchoir,
caractérisé en ce que de la chaleur de chauffage est transférée, par échange thermique (34), depuis la vapeur produite dans la chaudière à récupération de chaleur (13) à un milieu caloporteur circulant dans un circuit, pour réaliser un séchage direct de la boue de curage,
que le second refroidissement est réalisé par une unité de refroidissement (20) à une température supérieure à la température limite adiabatique de refroidissement pour la condensation de la vapeur d'eau du gaz de fumée, et qu'un additif basique (9) est envoyé à l'installation de combustion (6) et un autre additif basique (22) est envoyé au gaz de fumée avant le dépoussiérage avec filtration (23).

2. Procédé d'incinération de boues de curage, selon lequel la boue de curage est séchée à l'aide d'un séchoir (3) chauffé par un milieu caloporteur (31) et ensuite est incinérée dans une installation de combustion (6), selon lequel le gaz de fumée de l'installation de combustion est envoyé à une première unité de dépoussièrage (17), puis est soumis à un premier refroidissement (40, 46) et, après le premier refroidissement, à un second refroidissement (20) à une température plus basse, et ensuite le gaz de fumée est envoyé à une unité de dépoussiérage avec filtration (23) et des vapeurs (23) sont évacuées du séchoir,
caractérisé en ce qu'après le premier dépoussiérage (17), le gaz de fumée (42) est envoyé au séchoir (30) en tant que milieu caloporteur pour un séchage direct de la boue de curage,
que le second refroidissement est réalisé au moins par une unité de refroidissement (20) à une température supérieure à la température limite adiabatique de refroidissement pour la condensation de la vapeur d'eau du gaz de fumée, et qu'un additif basique (9) est envoyé à l'installation de combustion (6) et qu'un autre additif basique (22) est envoyé au gaz de fumée, avant le dépoussiérage avec filtration (23).

3. Procédé selon la revendication 2, caractérisé en ce qu'on utilise comme milieu caloporteur pour le séchage direct de la boue de curage, un gaz de fumée (43) refroidi après le premier dépoussiérage par un apport en mélange d'un gaz de refroidissement.

4. Procédé selon l'une des revendications 1 à 3,
caractérisé en ce que le mélange, qui quitte l'unité de séchage et qui est constitué par le gaz de fumée, des vapeurs et éventuellement un gaz de refroidissement, est dépoussiéré (32) avant l'apport de l'autre additif basique.

5. Procédé selon l'une des revendications 1 à 4,
caractérisé en ce que l'autre additif basique est introduit en amont ou en aval de l'unité de refroidissement (20).

6. Installation pour l'incinération de boues de curage comprenant un séchoir (30) pour sécher la boue de curage à l'aide d'un milieu caloporteur (31), un dispositif de combustion (6) branché en aval du séchoir, une première unité de dépoussiérage (17) branchée directement en aval du dispositif de combustion, une chaudière à récupération de chaleur (13) branchée en aval de la première unité de dépoussiérage, en tant que puits de chaleur pour la production de vapeur, un autre puits de chaleur branché en aval de la chaudière à récupération de chaleur et une seconde unité de dépoussiérage (23), branchée en aval du second puits de chaleur,
caractérisé en ce que pour un séchage direct de la boue de curage, un circuit (31) du milieu caloporteur est associé au séchoir (30),
que dans le circuit (31) du milieu caloporteur est disposé un échangeur de chaleur (34), à l'aide duquel de la chaleur peut être transférée depuis la vapeur produite par la chaudière à récupération de chaleur (13) au circuit du fluide caloporteur,
que l'autre puits de chaleur comprend au moins une unité de refroidissement (20) et qu'il est prévu un dispositif (11a; 9a, 9b) pour l'envoi d'un additif basique à l'installation de combustion (6) et qu'un autre dispositif (22) pour l'envoi d'un additif basique est branché en amont de l'unité de dépoussiérage avec filtration (23).

7. Installation pour l'incinération de boues de curage comprenant un séchoir (30) pour sécher la boue de curage à l'aide d'un milieu caloporteur (31), un dispositif de combustion (6) branché en aval du séchoir, une première unité de dépoussiérage (17) branchée directement en aval de l'installation de combustion, un premier puits de chaleur (43, 46) branché en aval de la première unité de dépoussiérage, et un autre puits de chaleur (20) branché en aval du premier puits de chaleur, et une seconde unité de dépoussiérage (23) branchée en aval de l'autre puits de chaleur, caractérisée en ce que pour le séchage direct de la boue de curage, la première unité de dépoussiérage (17) est reliée, du côté du gaz de fumée, au séchoir (30) et l'autre puits de chaleur, qui est relié à la sortie du séchoir comprend au moins une unité de refroidissement (20), et qu'il est prévu un dispositif (11a; 9a, 9b) pour l'envoi d'un additif basique à l'installation de combustion (6) et qu'un autre dispositif (22) pour l'envoi d'un additif basique est branché en amont de l'unité de dépoussiérage avec filtration (23).

8. Installation selon la revendication 6 ou 7,
caractérisée en ce que l'autre dispositif (22) pour l'envoi d'un additif basique est branché en amont ou en aval de l'unité de refroidissement (20).
